**Europäisches Patentamt**

(19) **European Patent Office**

**Office européen des brevets**

(11) Numéro de publication: **0 069 601**
**.B1**

(12) **FASCICULE DE BREVET EUROPEEN**

(45) Date de publication du fascicule du brevet:
13.02.85

(51) Int. Cl.⁴: **C 03 B 37/08,** C 03 B 37/02, C 03 B 37/075, D 01 D 5/12, D 01 D 4/02

(21) Numéro de dépôt: **82400869.2**

(22) Date de dépôt: **11.05.82**

(54) **Dispositif et procédé de fabrication par étirage mécanique de fibres continues de section différente et fibres aussi obtenues.**

(30) Priorité: **14.05.81 FR 8109633**

(43) Date de publication de la demande:
**12.01.83 Bulletin 83/2**

(45) Mention de la délivrance du brevet: .
**13.02.85 Bulletin 85/7**

(84) Etats contractants désignés:
**BE DE FR GB IT NL SE**

(56) Documents cités:
**GB - A - 2 053 889**
**US - A - 3 019 078**

(73) Titulaire: **VETROTEX SAINT-GOBAIN, 767 quai des Allobroges, F-73000 Chambéry (FR)**

(72) Inventeur: **Lecron, Jacques, 77 rue des Comtes, F-73190 Challes les Eaux (FR)**
Inventeur: **Manera, Maxime, 12 route de Sécheron Jacob Bellecombette, F-73000 Chambery (FR)**
Inventeur: **Faure, Jean-Paul, Tormery Chignin, F-73800 Montmelian (FR)**
Inventeur: **Renaudin, Jean-Pierre, Begon Saint-Sulpice, F-73160 Cognin (FR)**

(74) Mandataire: **Breton, Jean-Claude et al, SAINT-GOBAIN RECHERCHE 39, quai Lucien Lefranc, F-93304 Aubervilliers (FR)**

## Description

La présente invention est relative à un dispositif et à un procédé pour la fabrication de fibres continues à partir de matières thermoplastiques minérales, telles que des verres, obtenues par étirage mécanique de la matière fondue s'écoulant d'une pluralité d'orifices disposés à la base d'une filière. L'invention concerne plus particulièrement un procédé de fabrication de fils de verre composés d'une pluralité de filaments présentant des sections différentes.

Les filaments généralement obtenus par étirage mécanique de filets de verre issus d'une pluralité d'orifices identiques présentent normalement une section transversale circulaire sensiblement uniforme en raison de la tension superficielle élevée du verre fondu. De ce fait, lorsque ces filaments sont rassemblés pour former un fil, de nombreux vides séparent les filaments les uns des autres et réduisent sensiblement le degré de compacité dudit fil.

L'utilisation d'un tel fil comme agent de renforcement de matières synthétiques organiques, thermoplastiques ou thermodurcissables ne permet pas d'incorporer dans ces matières autant de verre qu'il serait souhaitable pour améliorer leurs propriétés mécaniques. Cette limitation peut être surmontée en assemblant des filaments de sections différentes ou des filaments de section transversale identique mais non circulaire.

La fabrication de filaments présentant des sections transversales non circulaires est notamment décrite dans l'article de R. A. HUMPHREY, intitulé: »Forming glass filaments with unusual cross sections« (7ème Congrès International du Verre — BRUXELLES 1965).

D'après cet article, des filaments à section rectangulaire ou hexagonale par exemple peuvent être obtenus en employant un processus de fabrication similaire à celui des fibres optiques.

Le matériau de départ est une baguette, ou préforme, qui présente la section transversale recherchée, et dont on ramollit localement l'extrémité inférieure afin d'en étirer un filament suffisamment fin qui conserve à échelle réduite la section initiale.

Ce procédé nécessite la fabrication préalable de la préforme et un contrôle très précis des températures de formage. Son caractère discontinu et artisanal ne permet pas d'envisager une exploitation industrielle à grande échelle.

Un autre procédé est évoqué dans la description des brevets américains 2 758 951 et 2 906 656 relatifs à la fabrication d'un matériau composite. Le dispositif de mise en œuvre du procédé décrit dans ces brevets comprend une filière munie à sa partie inférieure de deux séries d'orifices circulaires de perçage différent, alternant régulièrement sur une seule rangée longitudinale. A partir desdits orifices on étire une pluralité de filaments de contour circulaire présentant des sections différentes, l'étirage étant réalisé de manière à former une nappe de filaments parallèles, où chaque filament de fort diamètre est entouré de plusieurs filaments de plus faible diamètre. La nappe est enroulée sur un tambour sur lequel on forme jusqu'à plusieurs centaines de couches successives. A part une indication approximative sur le diamètre des orifices, aucune précision n'est donnée quant aux conditions de marche d'une telle filière.

Le brevet français publié sous le numéro 1 341 710 décrit un procédé pour obtenir des filaments de section droite non circulaire à partir d'une filière à tétons classiques.

Ce procédé consiste à établir un contact entre la surface du verre dès sa sortie de l'orifice et une surface refroidie. Sous l'effet du refroidissement, la viscosité du verre augmente localement et fige la déformation du verre ainsi provoquée. On peut obtenir de la sorte une grande variété de filaments à section droite non circulaire.

Indépendamment des difficultés que soulève la marche d'une telle installation, il est bien évident que le nombre de filaments délivrés par filière est très faible, étant donné que chaque téton doit être équipé d'un dispositif de déformation dont l'encombrement est loin d'être nul au plan industriel. Une telle solution ne présente qu'un intérêt limité.

La présente invention a pour objet un dispositif et un procédé de fibrage qui permettent d'obtenir un fil continu composé d'un nombre élevé de filaments présentant des sections droites différentes.

La présente invention a notamment pour but d'obtenir, à partir d'un dispositif de fibrage donné, un fil composé d'un mélange de filaments de sections différentes en proportion constante et définie, choisi de manière à augmenter le degré de compacité dudit fil.

Ces buts sont atteints par l'emploi d'une nouvelle forme de filière dans une installation de fibrage telle que définie ci-après:

L'installation de fibrage comprend essentiellement une source d'alimentation en matière thermoplastique, telle que du verre, reliée à une filière chauffée par effet Joule, un dispositif de soufflage de gaz dirigé vers le fond de la filière et des moyens d'étirage, le fond de ladite filière présentant une face inférieure qui comporte une multiplicité de centres de fibrage C de structures différentes, chaque centre de fibrage étant formé par une zone perforée d'un groupe d'orifices à partir desquels on peut étirer de manière stable au moins un filament.

Par centres de fibrage de structures différentes, on entend des zones perforées de groupes d'orifices qui se distinguent entre elles notamment par la nature de l'alliage métallique dont elles sont constituées et/ou par le nombre d'orifices et/ou par la section des orifices et/ou par la distance séparant les orifices.

Selon un mode de réalisation de l'invention ces centres de fibrage sont régulièrement disposés sur le fond d'une filière constitué d'une plaque plane.

Selon un autre mode de réalisation de l'invention ces centres de fibrage sont disposés dans la base de bossages dont les parois cernent au moins un alvéole interne.

Le procédé de fabrication selon l'invention consiste, à partir d'une filière présentant des centres de fibrage de structures différentes, à refroidir le fond de ladite filière de manière à porter le verre à une température telle qu'il se forme simultanément un filament par orifice sur un certain nombre de centres de fibrage déterminés et un filament par groupe d'orifices sur les autres centres de fibrage.

L'invention est exposée en détail ci-après en se référant aux figures jointes au présent mémoire, et selon lesquelles:

La fig. 1 est une vue de face dont certaines parties sont arrachées et qui représente schématiquement une installation de fibrage équipée d'une filière selon l'invention.

La fig. 2 est une vue en plan à échelle agrandie d'une partie de la face inférieure d'un premier exemple de fond de filière selon l'invention.

La fig. 3, qui illustre un deuxième exemple de filière selon l'invention, est une vue en perspective d'une partie du fond de la filière avec bossages délimitant des alvéoles.

La fig. 4 est une coupe verticale des bossages représentés fig. 3.

La fig. 5 est une coupe horizontale selon le plan A-A des bossages représentés fig. 4.

Les fig. 6 et 7 sont des vues en plan d'autres types de bossages.

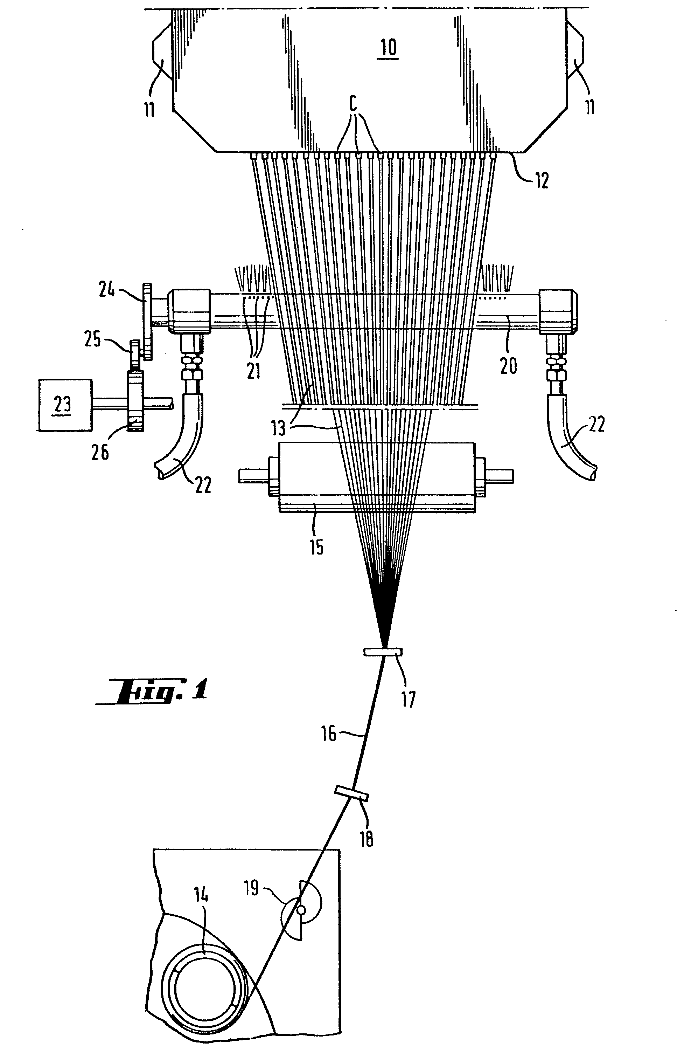

On se référera tout d'abord à la fig. 1, représentant à titre d'exemple la configuration générale d'un dispositif de fibrage équipé d'une filière selon l'invention.

La filière 10, généralement constituée d'un alliage platine 90%, rhodium 10%, est munie de bornes 11 pour l'arrivée du courant électrique utilisé pour son chauffage par effet Joule. Elle contient du verre fondu qui s'écoule par des orifices regroupés en une pluralité de centres de fibrage C, disposés sur la face inférieure d'une plaque plane 12, qui constitue le fond de la filière. La filière communique avec une source d'alimentation en verre de type connu qui peut être soit l'avant-corps d'un four à fusion directe à partir duquel le verre s'écoule dans la filière directement à l'état fondu, soit un système d'alimentation amenant le verre sous forme de billes, ces dernières étant alors refondues dans la filière. Quelle que soit la source d'alimentation utilisée, l'écoulement du verre fondu à travers les orifices est assuré essentiellement par la pression hydrostatique de la masse en fusion se trouvant au-dessus de la plaque. Le verre est étiré en filaments élémentaires 13, de façon classique, par l'intermédiaire d'une broche tournante 14. Après dépôt d'ensimage au moyen d'un organe ensimeur schématisé en 15, les filaments sont rassemblés en un ou plusieurs fils 16 par les organes habituellement employés dans cette technique, tels que les peignes 17 et 18; le fil est ensuite bobiné autour de la broche tournante 14, le long de laquelle il se déplace sous l'influence d'un organe de répartition ou hélice 19.

Une rampe de soufflage 20, munie par exemple d'une série d'ouvertures 21, est installée à proximité et au-dessous du plan de fibrage, les ouvertures 21 étant dirigées vers le fond de la filière. Lesdites ouvertures peuvent être constituées de buses ou de trous très rapprochés, disposés parallèlement à l'axe longitudinal de la filière. Elle est raccordée par les conduits 22 à une source de gaz non représentée.

Elle peut être montée fixe, rotative ou oscillante. Dans ce dernier cas, illustré à la fig. 1, l'une des extrémités de la rampe 20 est reliée à un moteur 23 par l'intermédiaire d'un bras 24 muni d'un galet 25 appliqué sur la portée d'une came 26 fixée sur l'axe du moteur. D'autres modes de soufflage peuvent être envisagés.

Suivant la structure et la disposition des différents centres de fibrage répartis sur le fond de la filière, le flux gazeux dirigé vers la face inférieure de la plaque 12 est utilisé uniquement au moment du démarrage de l'opération de fibrage ou pendant toute la durée de cette dernière.

La structure même des différents centres de fibrage C et leur agencement sur la plaque 12 permet de définir le nombre de filaments étirés par filière et la répartition des filaments suivant leur section.

Ainsi une filière selon l'invention comprend au moins deux séries de centres de fibrage, tels qu'il soit possible d'étirer simultanément un seul filament à partir de certains centres de fibrage et une pluralité de filaments à partir d'autres centres de fibrage.

Les différences de structure peuvent porter simplement sur la distance d'entr'axe des orifices et/ou sur le nombre d'orifices et/ou sur la section des orifices.

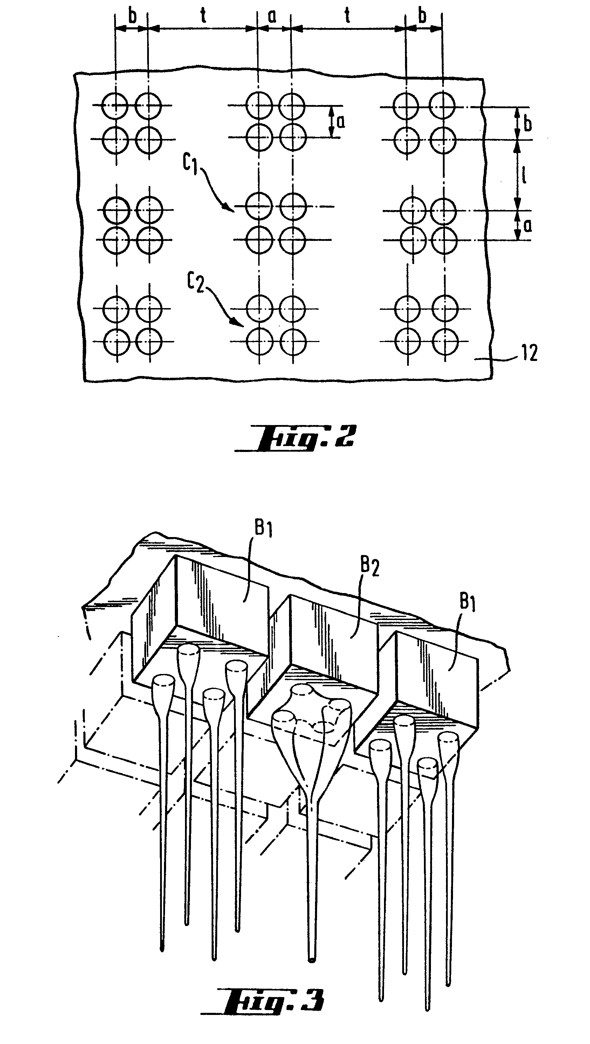

Ainsi la plaque 12 peut être une plaque plane perforée d'une pluralité de groupes d'orifices, chaque groupe formant un centre de fibrage, comme le montre à titre d'exemple la fig. 2. Les centres de fibrage $C_1$ et $C_2$ représentés comprennent tous quatre orifices circulaires de même diamètre disposés aux sommets d'un carré. Ils se distinguent uniquement par les distances a et b séparant les centres de deux orifices adjacents. Les centres $C_1$ et $C_2$, répartis en quinconce, forment des rangées séparées par une distance t, deux centres successifs dans une même rangée étant séparés par une distance 1. Les centres $C_1$ et $C_2$ peuvent se distinguer par le nombre d'orifices et/ou par la section de ces derniers.

Les différences de structure peuvent également porter sur la position relative des orifices par rapport à la plaque.

Ainsi la plaque 12 peut être munie d'une série de bossages faisant saillie au-dessous de ladite plaque, et dont les parois cernent au moins un alvéole interne, à la base desquels sont disposés les différents centres de fibrage.

Les figures 3 à 7 illustrent quelques exemples de bossages de forme différente.

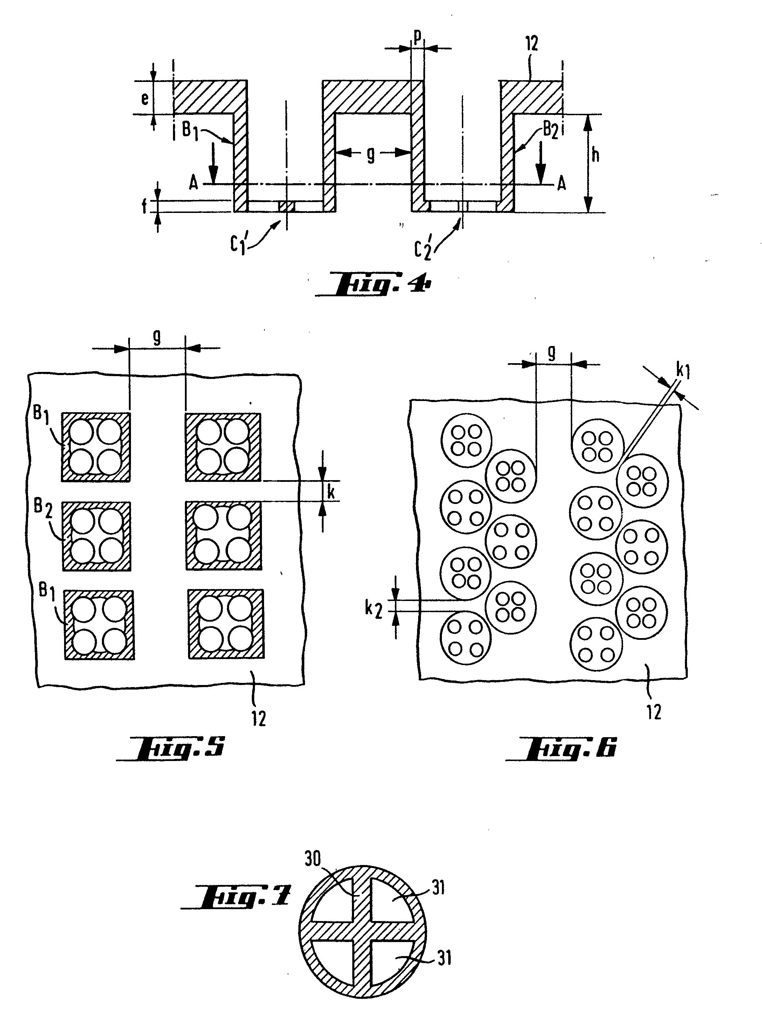

La forme des bossages est de préférence géométriquement simple, par exemple prismatique comme les bossages $B_1$ et $B_2$ qui présentent quatre faces latérales planes (fig. 3 à 5), ou cylindrique (fig. 6 et 7).

La ou les parois latérales sont de préférence verticales et la face inférieure externe desdits bossages, à la base de chaque alvéole, est, de préférence, sensiblement plane.

Les bossages représentés fig. 6 se distinguent uniquement par la distance séparant les orifices.

La fig. 7 représente un autre exemple de centre de fibrage; il s'agit de la face inférieure d'un bossage cylindrique fermé par une croix 30 qui délimite quatre orifices 31 en forme de quadrants. Cette forme d'orifice permet d'obtenir des fibres à section non circulaire. Ce type de centre de fibrage associé à d'autres centres de fibrage, tels ceux représentés fig. 6 par exemple, permet d'obtenir un mélange en proportion constante et définie de filaments de section circulaire et non circulaire pour produire un fil comme revendiqué à la revendication 22.

Les fig. 3 à 7 représentent des bossages pourvus d'un seul alvéole interne. Les filières selon l'invention peuvent être également munies de bossages présentant une section rectangulaire très allongée. Ces bossages en forme de barre peuvent comporter plusieurs alvéoles indépendants les uns des autres. La base de chaque alvéole sera munie d'un centre de fibrage dont les orifices sont disposés de préférence régulièrement par rapport à un axe vertical. Ceci est également recommandé pour les bossages ne comprenant qu'un seul alvéole car, lorsqu'on étire un seul filament par centre de fibrage, cette disposition des orifices permet notamment d'obtenir un écoulement plus régulier alimentant le bulbe dudit filament. Des rainures de faible profondeur peuvent être creusées sur la face inférieure externe de ce genre de bossage afin de séparer deux centres de fibrage adjacents.

Les différences de structure des centres de fibrage peuvent également porter sur la nature de la matière constituant la face inférieure externe de chaque zone perforée, le choix de cette matière étant déterminé par son degré de mouillabilité vis-à-vis du verre fondu. Une filière selon l'invention pourra donc comprendre différents centres de fibrage dont les faces inférieures externes seront différemment mouillées selon la nature de la matière constituant lesdites faces.

Ainsi les filières selon l'invention comprennent au moins deux catégories de zones perforées, les unes caractérisées par un angle de contact avec le verre fondu à 1150°C pour les unes supérieur à 60° et pour les autres inférieur à 50°.

Le changement de matière peut concerner soit la totalité du centre de fibrage, soit la seule face inférieure externe de la zone perforée.

Dans le cas des filières à bossages on peut ainsi utiliser deux alliages différents pour réaliser en totalité ou en partie deux séries de bossages. A titre d'exemple une filière de ce type est munie de deux séries de bossages de forme cylindrique, les uns entièrement constitués d'un alliage à 90% de platine et 10% de rhodium, les autres d'un alliage de 93% de platine, 3% d'iridium et 4% d'or. Cet alliage est commercialisé par la Société COMPTOIR-LYON-ALEMAND-LOUYOT sous la référence PR 3/4. L'angle de contact du verre E sur une plaque de l'alliage ternaire précité est de 75° alors que, dans les mêmes conditions, il n'est que de 39° sur une plaque de platine rhodié à 10%.

La différenciation des centres de fibrage peut également être obtenue par le dépôt d'un produit sur la face externe de certaines zones perforées. Ce produit peut être déposé par tout moyen adapté sur lesdites zones, que celles-ci soient disposées sur une filière à fond plat ou une filière à bossages.

A titre d'exemple une filière selon l'invention est munie de deux séries de bossages, les uns présentant une face inférieure externe recouverte d'un dépôt de nitrure de bore qui joue le même rôle que l'alliage ternaire précédent, les autres étant en platine rhodié.

Les bossages sont disposés à intervalles réguliers sur le fond de la filière ainsi que l'illustrent les fig. 3, 5 et 6.

Par exemple des bossages de forme prismatique à un seul alvéole, tels que $B_1$ et $B_2$ sont disposés par groupes formant chacun une rangée perpendiculaire à l'axe longitudinal de la filière. Des bossages cylindriques, sont avantageusement disposés en quinconce et regroupés en rangées doubles comme le montre la fig. 6. L'écartement g entre deux groupes consécutifs est tel qu'il permet l'insertion d'un organe de refroidissement, par exemple des ailettes de type classique.

Le fonctionnement des filières selon l'invention est exposé ci-après, en distinguant les filières à fond plat des filières à bossages.

Pour les filières à fond plat comprenant par exemple deux catégories de centres de fibrage $C_1$ et $C_2$, le démarrage est le suivant:

Le verre chaud s'écoule par l'ensemble des orifices et enverre progressivement la quasi-totalité de la face inférieure de la plaque de fibrage.

Grâce à l'action du flux gazeux dirigé en permanence contre le fond de la filière, l'opérateur écarte la masse de verre formée sur ledit fond et provoque la division de l'enverrage en une multiplicité de petits enverrages dont chacun est circonscrit à une zone perforée correspondant à un centre de fibrage.

A l'issue de cette première phase l'opérateur étire à faible vitesse un filament par centre de fibrage. Puis sous l'action du flux gazeux la température des bulbes de verre diminue et atteint une température $\theta_1$, au-dessous de laquelle seuls les filaments étirés à partir des centres de fibrage $C_1$ se subdivisent en autant de filaments qu'il existe d'orifices dans ces centres de fibrage. Les filaments étirés à partir des centres de fibrage $C_2$ ne sont pas affectés par cette opération. La température des bulbes des différents filaments ainsi étirés est stabilisée à une température de fibrage T inférieure à la température $\theta_1$ mais supérieure à une température $\theta_2$ au-dessous de laquelle il se produirait à partir des centres $C_2$ une subdivision des filaments étirés aboutissant à l'étirage d'un filament par orifice pour la totalité des centres de fibrage. La température T est stabilisée de préférence à une valeur proche de

$$1/2 (\theta_1 + \theta_2).$$

Pour toute filière destinée à la fabrication de fibres de verre continues par étirage mécanique, la température des bulbes varie légèrement d'un point à un autre de la filière et/ou dans le temps. Pour tenir compte de ces fluctuations autour d'une valeur moyenne et obtenir une marche stable des filières selon l'invention, il est souhaitable que l'écart de température

$$\Delta\theta = \theta_1 - \theta_2$$

soit au moins égal à 30° C.

Cette valeur est obtenue grâce au choix approprié des caractéristiques dimensionnelles des différents centres de fibrage.

Pour les filières à bossages selon l'invention comprenant par exemple deux séries de centres de fibrage $C'_1$ et $C'_2$, le fonctionnement est le suivant:

Au démarrage le verre fondu alimentant la filière passe dans les alvéoles, s'écoule par les différents orifices perforés à la face inférieure externe des bossages et enverre rapidement ladite face. L'écoulement provoque la formation d'une ou plusieurs masses globuleuses par bossage, qui descendent progressivement sous l'action de leur propre poids, en entraînant dans leurs sillages un filament de verre. Cette phase peut être accélérée par une intervention manuelle. On réunit l'ensemble des filaments ainsi formés et l'on procède à leur étirage mécanique à faible vitesse. On envoie alors un courant gazeux, de préférence de l'air, en balayant le fond de la filière. Comme pour les filières à fond plat, la température des bulbes des filaments diminue sous l'action du courant gazeux. Elle atteint une température $\theta'_1$ audessous de laquelle les filaments étirés à partir des centres de fibrage $C'_1$ se subdivisent en autant de filaments qu'il existe d'orifices dans ces centres de fibrage.

Comme pour les filières précédentes la température des bulbes des différents filaments ainsi étirés est stabilisée à une température T' comprise entre les températures limites $\theta'_1$ et $\theta'_2$, cette dernière température correspondant à la limite au-dessous de laquelle il se produirait une subdivision des filaments étirés à partir des centres $C'_2$.

· Les filaments ainsi obtenus sont rassemblés en au moins un fil enroulé sur un support en rotation et on poursuit habituellement l'étirage desdits filaments en arrêtant le courant gazeux dès le début de l'enroulement du fil. Il est également possible, en réduisant le flux du courant gazeux, de continuer à balayer le fond de la filière pendant toute l'opération de fibrage.

Pour les mêmes raisons que celles exposées précédemment la température T' est stabilisée de préférence à une valeur proche de

$$1/2 (\theta'_1 + \theta'_2),$$

et l'écart de température $\Delta\theta'$ doit être au moins égal à 30° C.

Cet écart $\Delta\theta'$ est obtenu par un choix approprié des caractéristiques dimensionnelles des bossages, notamment de leur hauteur h et de l'épaisseur p de leur paroi latérale, ainsi que de l'épaisseur f du fond du bossage.

Le refroidissement du verre, simplement obtenu par rayonnement et par convection entre les parois des bossages et les gaz ambiants circulant dans les intervalles séparant lesdits bossages et entraînés par les filaments en cours d'étirage, permet d'homogénéiser la température du verre sortant des divers orifices. Ce refroidissement peut être éventuellement renforcé et réglé par l'insertion d'organes refroidisseurs entre les rangées de bossages.

La répartition des orifices est commandée par les différentes distances séparant les centres de fibrage et, pour chaque centre, par les distances séparant les orifices.

Que la filière soit à fond plat ou à bossages la distance bord à bord des orifices appartenant à un même centre de fibrage peut varier de 1 mm à 0,2 mm et même moins, mais elle est de préférence comprise entre 0,2 et 0,5 mm.

Pour les distances séparant deux centres de fibrage adjacents on distinguera les deux types de filières.

Pour les filières à fond plat, ces distances, appelées t et 1 sur la fig. 2, doivent être égales ou supérieures à 1,5 fois le diamètre des orifices présentant la plus grande section sur la filière en question.

Pour les filières à bossages les distances entre centres de fibrage adjacents sont déterminées par les distances séparant deux bossages adjacents.

Les bossages peuvent être disposés en rangées simples ou en rangées doubles, perpendiculairement à l'axe longitudinal du fond de la filière ainsi que l'illustrent les fig. 5 et 6. Dans chaque rangée simple, les bossages sont séparés par une distance k qui doit être au moins égale à 0,1 mm, mais qui est de préférence comprise entre 0,4 et 1 mm. Lorsqu'on adopte une configuration en quinconce, les distances $k_1$ et $k_2$ séparant respectivement deux bossages adjacents appartenant à une même rangée et deux bossages adjacents appartenant a deux rangées différentes doivent être aussi au moins égales à 0,1 mm mais sont de préférence comprises entre 0,4 et 1 mm.

L'écartement g existant entre deux rangées simples ou doubles est tel qu'il permet d'insérer un élément du dispositif de refroidissement. Ainsi cet écartement peut varier de 2,5 à 5,5 mm et de préférence de 3,5 à 4 mm.

Un avantage particulier de l'emploi de bossages ainsi disposés en rangées simples ou doubles est que le courant électrique circule essentiellement, dans la plaque du fond, entre les bossages plutôt que dans leurs parois Il en résulte notamment que l'épaisseur de la paroi inférieure des bossages peut être choisie indépendamment des caractéristiques électriques de la filière considérée globalement. De ce fait, les filières selon l'invention présentent des caractéristiques électriques similaires à celles des filières à fonds classiques à tétons, sans en présenter les inconvénients.

Certaines caractéristiques dimensionnelles importantes sont illustrées par la fig. 4; il s'agit des épaisseurs e et f correspondant respectivement au fond de la filière et à celui des bossages, de la hauteur h et de l'épaisseur p de la paroi latérale de ces derniers.

La détermination de ces caractéristiques est conditionnée essentiellement par les phénomènes d'énergie électrique dissipée par effet Joule, la résistance mécanique de la filière, les phénomènes d'échange thermique, le débit de verre par orifice et le nombre d'orifices par unité de surface.

Ainsi, dans le souci de conférer une résistance mécanique suffisante au fond de la filière tout en immobilisant le moins de métal possible, l'épaisseur e varie de 0,5 à 3 mm et de préférence de 1 à 2 mm.

Cette épaisseur, déterminée indépendamment des caractéristiques dimensionnelles du bossage, peut varier d'une zone à une autre du fond et est choisie de manière à obtenir une distribution des courants électriques qui soit la plus homogène possible sur l'ensemble du fond de la filière.

L'épaisseur f qui conditionne en partie le débit de verre peut varier indépendamment des autres caractéristiques dimensionnelles; en choisissant des épaisseurs très faibles, on réduit au minimum les pertes de charge dans les orifices, ce qui permet d'obtenir des débits élevés à partir d'orifices de faible diamètre. Cette épaisseur f peut varier de 0,2 à 2 mm et de préférence de 0,4 à 1 mm, en fonction du diamètre des orifices.

Le degré de refroidissement du verre dépend étroitement de la hauteur h et de l'épaisseur p de la paroi latérale des bossages.

L'épaisseur p peut être constante, lorsque le bossage est de forme cylindrique par exemple. Elle peut également varier dans un plan horizontal, lorsque le bossage, de forme extérieure parallélépipédique, correspond à un alvéole interne presque cylindrique, ainsi que le représente la fig. 5.

D'une façon générale, pour les filières selon l'invention, h varie de 1 à 10 mm et p de 0,2 à 2 mm et de préférence de 0,4 à 1 mm.

L'intérêt et les avantages du procédé et du dispositif précédemment décrits ressortiront clairement des exemples suivants, qui illustrent quelques modes de réalisation particuliers de filières selon l'invention.

### Exemple 1

Le fond de la filière est constitué d'une plaque plane en platine rhodié (90% platine — 10% rhodium) et comprend deux catégories de centres de fibrage tels que ceux représentés sur la fig. 2.

Les différentes caractéristiques dimensionnelles de la filière sont les suivantes:

| | | |
|---|---|---|
| — épaisseur e | = | 1 mm |
| — diamètre des orifices | = | 1,60 mm |
| — distances a | = | 1,80 mm |
| b | = | 2,10 mm |
| l | = | 3,65 mm |
| t | = | 6,15 mm |

On obtient quatre filaments sur les centres $C_1$ et un filament sur les centres $C_2$ dans les conditions suivantes:

Lorsqu'on fibre en l'absence de courant gazeux on obtient une marche stable quand la température T du bulbe des filaments est comprise entre les températures limites $\theta_1$ et $\theta_2$ qui sont respectivement égales à 1230°C et 1190°C.

Lorsqu'on maintient le courant gazeux pendant l'opération de fibrage on obtient une marche stable quand la température T est comprise entre

$$\theta_1 = 1250°C \text{ et } \theta_2 = 1210°C.$$

Ainsi le fond de la filière étant balayé en permanence par de l'air sous pression, on obtient simultanément 4 filaments de 15 μm de diamètre sur les centres de type $C_1$ et un filament de 30 μm de diamètre sur les centres de type $C_2$ pour en adoptant les conditions de fibrage suivantes:

| | | |
|---|---|---|
| température des bulbes de verre T | = | 1240°C |
| vitesse d'étirage | = | 10 m · s$^{-1}$ |

### Exemple 2

Le fond de la filière est constitué d'une plaque plane en platine rhodié 90%—10% et comprend deux catégories de centres de fibrage disposés à la base d'une série de bossages. Ces derniers sont identiques à ceux représentés sur les fig. 3 à 5. Ils sont disposés en rangée en alternant les bossages de type $B_1$ et $B_2$.

Les différentes caractéristiques dimensionnelles de la filière sont les suivantes:

| | | |
|---|---|---|
| — épaisseurs | | |
| — du fond de la filière e | = | 1,5 mm |
| — du fond du bossage f | = | 0,5 mm |
| — distance entre deux bossages adjacents: | | |
| — dans une même rangée k = | | 1 mm |
| — entre deux rangées g | = | 3,5 mm |

— section des bossages = 4,6 × 4,6 mm
— hauteur des bossages h = 4,5 mm
— diamètre des orifices = 1,6 mm
— distance bord à bord entre deux orifices adjacents:
  — bossage $B_1$ = 0,5 mm
  — bossage $B_2$ = 0,2 mm

En l'absence de soufflage on obtient simultanément quatre filaments sur les bossages $B_1$ et un filament sur les bossages $B_2$ lorsque la température T' des bulbes des filaments est comprise entre

$$\theta'_1 = 1240°\,C \text{ et } \theta'_2 = 1200°\,C.$$

Ainsi par exemple à 1220°C au bulbe et pour une vitesse de 10 m · s$^{-1}$ on obtient simultanément des filaments de 20 et 40 μm de diamètre.

Les exemples précédents montrent que les filières selon l'invention permettent d'obtenir des fils composés d'un mélange de filaments de sections droites différentes en proportion constante et définie.

Cependant, il est bien évident que les filières selon l'invention peuvent être utilisées à des températures de fibrage supérieures à $\theta_1$ (ou $\theta'_1$) ou inférieures à $\theta_2$ (ou $\theta'_2$) de manière à obtenir des fils composés de filaments présentant tous sensiblement la même section droite.

## Revendications

1. Dispositif pour la fabrication par étirage mécanique d'une matière thermoplastique fondue, telle que du verre, de filaments continus présentant des sections différentes, comprenant notamment une source d'alimentation en verre reliée à une filière chauffée par effet Joule, un dispositif de soufflage de gaz dirigé vers le fond de la filière et des moyens d'étirage desdits filaments, caractérisé en ce que le fond de ladite filière présente une face inférieure qui comporte une multiplicité de centres de fibrage répartis en au moins deux catégories différentes, chaque centre étant formé par une zone perforée d'un groupe d'orifices présentant une structure différente d'une catégorie à l'autre, la structure desdites zones étant telle qu'on puisse étirer, simultanément et de manière stable, un seul filament à partir de chaque centre d'au moins une catégorie et un filament à partir de chaque orifice appartenant aux centres d'au moins une autre catégorie.

2. Dispositif selon la revendication 1, caractérisé en ce que les centres de fibrage se distinguent par la nature de la matière constituant la paroi des zones perforées.

3. Dispositif selon la revendication 1, caractérisé en ce que les centres de fibrage se distinguent par la nature de la matière recouvrant la face inférieure externe des zones perforées.

4. Dispositif selon l'une des revendications 2 et 3, caractérisé en ce qu'une partie des zones perforées comporte une matière dont l'angle de contact avec le verre fondu à 1150°C est supérieur à 60° et que l'autre partie desdites zones comporte une matière dont l'angle de contact avec le verre fondu est inférieur à 50°.

5. Dispositif selon l'une des revendications précédentes, caractérisé en ce que les centres de fibrage sont régulièrement disposés sur le fond de la filière, fond constitué d'une plaque plane.

6. Dispositif selon l'une des revendications 1 à 4, caractérisé en ce que les centres de fibrage sont disposés à la base de bossages pourvus d'au moins un alvéole interne.

7. Dispositif selon l'une des revendications précédentes, caractérisé en ce que les centres de fibrage se distinguent par la section des orifices.

8. Dispositif selon l'une des revendications précédentes, caractérisé en ce que les différents centres de fibrage se distinguent par la distance séparant deux orifices adjacents.

9. Dispositif selon l'une quelconque des revendications précédentes, caractérisé en ce que les différents centres de fibrage se distinguent par le nombre d'orifices.

10. Dispositif selon l'une des revendications 6 à 9, caractérisé en ce que les bossages sont de forme prismatique.

11. Dispositif selon l'une des revendications 6 à 9, caractérisé en ce que les bossages sont de forme cylindrique.

12. Dispositif selon la revendication 10, caractérisé en ce que chaque bossage est formé d'un barreau percé de plusieurs alvéoles indépendants, chaque alvéole étant ouvert à sa partie supérieure vers l'intérieur de la filière et fermé à sa partie inférieure par une paroi perforée d'un groupe d'orifices.

13. Dispositif selon la revendication 12, caractérisé en ce que les barreaux sont des parallélépipèdes rectangles percés d'alvéoles cylindriques.

14. Dispositif selon les revendication 12 et 13, caractérisé en ce que les groupes d'orifices percés à la base de chaque alvéole sont séparés par des entailles pratiquées sur la face inférieure du bossage.

15. Procédé de fabrication par étirage mécanique de filaments continus présentant des sections différentes formés à partir d'une matière minérale thermoplastique, telle que du verre, alimentant une filière généralement chauffée par effet Joule, dont la face inférieure est perforée d'un grand nombre d'orifices disposés pour former une pluralité de groupes régulièrement répartis et selon lequel, initialement, le verre s'étale sur ladite face inférieure, caractérisé en ce qu'on étire un filament par groupe d'orifices, puis on refroidit le fond de la filière à une température telle que pour une partie des groupes, les filaments étirés à partir desdits groupes se subdivisent en autant de filaments qu'il existe d'orifices dans chacun de ces groupes, et que pour l'autre partie on poursuit l'étirage d'un seul filament par groupe d'orifices.

16. Procédé selon la revendication 15, caractérisé en ce qu'on refroidit le fond de la filière de telle manière que la température moyenne du verre T à la sortie des orifices est comprise entre deux températures limites $\theta_1$ et $\theta_2$ caractéristiques de deux familles de groupes d'orifices, températures limites au-dessous desquelles le verre se subdivise en autant de filaments qu'il existe d'orifices par groupe et au-dessus desquelles le verre demeure sous forme d'un seul filament étiré à partir d'un groupe d'orifices.

17. Procédé selon la revendication 16, caractérisé en ce que l'écart de température

$$\Delta\theta = \theta_1 - \theta_2$$

est au moins égal à 30°C.

18. Procédé selon l'une des revendications 15 à 17, caractérisé en ce que l'écart de température $\Delta\theta$ résulte d'une différence de distance bord à bord entre orifices.

19. Procédé selon l'une des revendications 15 à 18, caractérisé en ce que l'écart de température $\Delta\theta$ résulte d'une différence quant au nombre d'orifices par groupe.

20. Procédé selon l'une des revendications 15 à 19, caractérisé en ce que les groupes d'orifices étant perforés sur la face inférieure d'éléments disposés en saillie au-dessous de la plaque de la filière, l'écart de température $\Delta\theta$ résulte de la hauteur h desdits éléments.

21. Procédé selon la revendication 20, caractérisé en que l'écart de température $\Delta\theta$ résulte de l'épaisseur de la paroi latérale des éléments disposés en saillie au-dessous de la plaque de la filière.

22. Fil formé d'une pluralité de filaments continus, présentant des sections droites différentes choisies de manière à augmenter le degré de compacité dudit fil, obtenus par étirage mécanique d'une matière thermoplastique fondue, telle que du verre, caractérisé en ce qu'il est composé d'un mélange en proportion constante et définie de filaments de sections droites circulaire et non circulaire.

## Patentansprüche

1. Vorrichtung zum mechanischen Ausziehen eines schmelzflüssigen thermoplastischen Materials, wie Glas zu kontinuierlichen Fäden mit unterschiedlichen Querschnitten mit insbesondere einer Quelle zur Zuführung von Glas, welche mit einer durch Joule-Effekt erwärmten Ziehdüseneinheit verbunden ist, mit einer Blaseinrichtung zur Erzeugung eines gegen den Boden der Ziehdüseneinheit gerichteten Gasstroms und mit einer Vorrichtung zum Ausziehen der Fäden, dadurch gekennzeichnet, daß der Boden der Ziehdüseneinheit eine Unterseite aufweist, die eine Vielzahl von in mindestens zwei unterschiedliche Kategorien aufgeteilten Fadenbildungszentren enthält, von denen jedes Zentrum durch eine Zone gebildet ist, die mit einer Gruppe von Öffnungen perforiert ist, die eine Struktur aufweist, welche von einer Kategorie zur anderen unterschiedlich ist, wobei die Struktur der Zonen derart ist, daß gleichzeitig und stetig ein einzelner Faden von jedem Zentrum wenigstens einer Kategorie und ein Faden von jeder Öffnung in Zentren wenigstens einer anderen Kategorie gezogen werden kann.

2. Vorrichtung nach Anspruch 1, dadurch gekennzeichnet, daß sich die Fadenbildungszentren durch die Natur des die Wand der perforierten Zonen bildenden Materials unterscheiden.

3. Vorrichtung nach Anspruch 1, dadurch gekennzeichnet, daß sich die Fadenbildungszentren durch die Natur des die äußere Unterseite der perforierten Zonen bedeckenden Materials unterscheiden.

4. Vorrichtung nach einem der Ansprüche 2 und 3, dadurch gekennzeichnet, daß ein Teil der perforierten Zonen ein Material enthält, dessen Kontaktwinkel mit dem schmelzflüssigen Glas bei 1150°C über 60° liegt, und daß der andere Teil der Zonen ein Material enthält, dessen Kontaktwinkel mit dem schmelzflüssigen Glas geringer als 50° ist.

5. Vorrichtung nach einem der vorhergehenden Ansprüche, dadurch gekennzeichnet, daß die Fadenbildungszentren regelmäßig auf dem Boden der Ziehdüseneinheit angeordnet sind, der durch eine ebene Platte gebildet ist.

6. Vorrichtung nach einem der Ansprüche 1 bis 4, dadurch gekennzeichnet, daß die Fadenbildungszentren an der Basis von Vorsprüngen angeordnet sind, die mit mindestens einer Innenzelle versehen sind.

7. Vorrichtung nach einem der vorhergehenden Ansprüche, dadurch gekennzeichnet, daß die Fadenbildungszentren sich durch den Querschnitt der Öffnungen unterscheiden.

8. Vorrichtung nach einem der vorhergehenden Ansprüche, dadurch gekennzeichnet, daß die verschiedenen Fadenbildungszentren sich durch den Abstand zwischen zwei benachbarten Öffnungen unterscheiden.

9. Vorrichtung nach einem der vorhergehenden Ansprüche, dadurch gekennzeichnet, daß die unterschiedlichen Fadenbildungszentren sich durch die Anzahl der Öffnungen unterscheiden.

10. Vorrichtung nach einem der Ansprüche 6 bis 9, dadurch gekennzeichnet, daß die Vorsprünge von prismatischer Form sind.

11. Vorrichtung nach einem der Ansprüche 6 bis 9, dadurch gekennzeichnet, daß die Vorsprünge von zylindrischer Form sind.

12. Vorrichtung nach Anspruch 10, dadurch gekennzeichnet, daß jeder Vorsprung durch einen mit mehreren unabhängigen Zellen gelochten Stab gebildet ist, wobei jede Zelle oben zum Inneren der Ziehdüseneinheit offen und unten durch eine Wand geschlossen ist, die durch eine Gruppe von Öffnungen perforiert ist.

13. Vorrichtung nach Anspruch 12, dadurch gekennzeichnet, daß die Stäbe Rechteckquader mit zylindrischen Zellen sind.

14. Vorrichtung nach den Ansprüchen 12 und 13, dadurch gekennzeichnet, daß die Gruppen von Öffnungen an der Basis einer jeden Zelle durch Einschnitte auf der Unterseite des Vorsprungs getrennt sind.

15. Verfahren zum mechanischen Ausziehen von kontinuierlichen Fäden mit unterschiedlichen Querschnitten aus einem mineralischen thermoplastischen Material, wie Glas, bei welchem das Glas einer im allgemeinen durch Joule-Effekt erwärmten Ziehdüseneinheit zugeführt wird, deren Unterseite durch eine große Anzahl von Öffnungen perforiert ist, die eine Anzahl von regelmäßig verteilten Gruppen bilden, und bei welchem zu Anfang das Glas auf der Unterseite verläuft, dadurch gekennzeichnet, daß ein Faden pro Gruppe von Öffnungen gezogen wird, darauf der Boden der Ziehdüseneinheit auf eine derartige Temperatur abgekühlt wird, daß für einen Teil der Gruppen die davon abgezogenen Fäden sich in eine der Anzahl der Öffnungen in jeder dieser Gruppen entsprechenden Zahl von Fäden unterteilen, und daß für den anderen Teil das Ziehen eines einzelnen Fadens pro Gruppe von Öffnungen fortgeführt wird.

16. Verfahren nach Anspruch 15, dadurch gekennzeichnet, daß der Boden der Ziehdüseneinheit derart abgekühlt wird, daß die mittlere Temperatur des Glases (T) am Ausgang der Öffnungen zwischen zwei Temperaturgrenzwerten $\theta_1$ und $\theta_2$ liegt, die für zwei Arten von Gruppen von Öffnungen charakteristisch sind, wobei unter diesen Grenzwerten das Glas sich in eine der Anzahl der pro Gruppe vorhandenen Öffnungen entsprechenden Zahl von Fäden unterteilt und oberhalb der Grenzwerte das Glas in Form eines einzelnen von einer Gruppe von Öffnungen abgezogenen Fadens verbleibt.

17. Verfahren nach Anspruch 16, dadurch gekennzeichnet, daß die Temperaturdifferenz

$$\Delta\theta = \theta_1 - \theta_2$$

mindestens 30°C beträgt.

18. Verfahren nach einem der Ansprüche 15 bis 17, dadurch gekennzeichnet, daß die Temperaturdifferenz $\Delta\theta$ aus einem Unterschied des Abstands zwischen den Öffnungsrändern resultiert.

19. Verfahren nach einem der Ansprüche 15 bis 18, dadurch gekennzeichnet, daß die Temperaturdifferenz $\Delta\theta$ aus einem Unterschied in der Anzahl der Öffnungen pro Gruppe resultiert.

20. Verfahren nach einem der Ansprüche 15 bis 19, dadurch gekennzeichnet, daß die Temperaturdifferenz $\Delta\theta$ bei den Gruppen von Öffnungen, die auf der Unterseite von Elementen ausgebildet sind, welche unter der Platte der Ziehdüseneinheit vorstehen, aus der Höhe h der Elemente resultiert.

21. Verfahren nach Anspruch 20, dadurch gekennzeichnet, daß die Temperaturdifferenz $\Delta\theta$ aus der Dicke der Seitenwand der Elemente resultiert, welche unter der Platte der Ziehdüseneinheit vorstehen.

22. Aus einer Vielzahl von kontinuierlichen Fäden gebildetes Garn, bei dem die Fäden unterschiedliche Querschnitte aufweisen, die derart ausgewählt sind, daß das Ausmaß des Garnes an Kompaktheit erhöht wird, und bei dem die Fäden durch mechanisches Ausziehen eines schmelzflüssigen thermoplastischen Materials, wie Glas, erzeugt sind, dadurch gekennzeichnet, daß das Garn aus einer Mischung von Fäden mit kreisförmigen und nicht kreisförmigen Querschnitten in einem konstanten und definierten Verhältnis zusammengesetzt ist.

**Claims**

1. Apparatus for the manufacture from a molten thermoplastics material, such as glass, by mechanical drawing of continuous filaments of various cross-sections, comprising especially a glass supply source connected to a die heated by the Joule effect, gas blowing means directed towards the bottom of the die and drawing means for said filaments, characterised in that the bottom of the said die has a lower surface which includes a multiplicity of fibre-forming centres divided into at least two different categories, each centre being formed by a zone perforated by a group of orifices having a structure which differs from one category to the other, the structure of the said zones being such that it is possible to draw, simultaneously and in a stable manner, a single filament from each centre of at least one category and a filament from each orifice belonging to the centres of at least one other category.

2. Apparatus according to claim 1, characterised in that the fibre-forming centres are distinguished from one another by the nature of the material which forms the wall of the perforated zones.

3. Apparatus according to claim 1, characterised in that the fibre-forming centres differ from one another by the nature of the material which covers the lower external surface of the perforated zones.

4. Apparatus according to either one of claims 2 or 3, characterised in that a proportion of the perforated zones comprises a material of which the angle of contact with the glass when molten at 1150°C is greater than 60° and in that the remainder of the said zones comprises a material of which the angle of contact with the molten glass is less than 50°.

5. Apparatus according to any one of the preceding claims, characterised in that the fibre-forming centres are arranged regularly on the bottom of the die, which bottom is formed by a flat plate.

6. Apparatus according to any of claims 1 to 4, characterised in that the fibre-forming centres are located on the base on bosses provided with at least one internal opening.

7. Apparatus according to any one of the preceding claims, characterised in that the fibre-forming centres are distinguished form one another by the cross-sections of the orifices.

8. Apparatus according to any one of the preceding claims, characterised in that the various fibre-forming centres are distinguished from one another by the distance between two adjacent orifices.

9. Apparatus according to any one of the preceding claims, characterised in that the different fibre-forming centres are distinguished from one another by the number of orifices.

10. Apparatus according to any one of claims 6 to 9, characterised in that the bosses are of prismatic form.

11. Apparatus according to any one of claims 6 to 9, characterised in that the bosses are of cylindrical form.

12. Apparatus according to claim 10, characterised in that each boss is in the form of a bar pierced by several independent openings, each opening being open at its upper part towards the interior of the die and closed at its lower part by a wall perforated by a group of orifices.

13. Apparatus according to claim 12, characterised in that the bars are rectangular parallelepipedes pierced by cylindrical openings.

14. Apparatus according to claims 12 and 13, characterised in that the groups of orifices pierced through the base of each opening are separated by grooves formed in the lower surface of the boss.

15. Process for the manufacture by mechanical drawing of continuous filaments having various cross-sections formed from a thermoplastic mineral material, such as glass, supplied to a die generally heated by the Joule effect, of which the lower surface is perforated with a large number of orifices arranged so as to form several regularly-distributed groups and according to which, initially, the glass spreads out over the said lower surface, characterised in that a filament is drawn through a group of orifices, then the bottom of the die is cooled to a temperature such that for a proportion of the groups, the drawn filaments from the said groups become divided into the same number of filaments as there are orifices in each of these groups, and in that for the remainder, a single filament is drawn from each group of orifices.

16. Process according to claim 15, characterised in that the bottom of the die is cooled such that the mean temperature T of the glass at the outlet of the orifices is between two limiting temperatures $\theta_1$ and $\theta_2$ which are characteristics of two families of groups of orifices, beneath which limiting temperatures the glass becomes divided into the same number of filaments as there are orifices per group and above which the glass remains in the form of a single filament drawn from a group of orifices.

17. Process according to claim 16, characterised in that the temperature difference

$$\Delta\theta = \theta_1 - \theta_2$$

is at least equal to 30° C.

18. Process according to any one of claims 15 to 17, characterised in that the temperature difference $\Delta\theta$ results from a difference in the edge-to-edge distance between orifices.

19. Process according to any of claims 15 to 18, characterised in that the temperature difference $\Delta\theta$ results from a difference in the number of orifices per group.

20. Process according to any of claims 15 to 19, characterised in that the groups of orifices are perforated through the lower surface of elements arranged projecting beneath the plate of the die, and the temperature difference $\Delta\theta$ results from the height h of the said elements.

21. Process according to claim 20, characterised in that the temperature difference $\Delta\theta$ results from the thickness of the lateral wall of the element arranged projecting beneath the die plate.

22. Thread formed from a plurality of continuous filaments having various cross-sections selected so as to increase the degree of compactness of the said thread and obtained by mechanical drawing of a molten thermoplastic material, such as glass, characterised in that it comprises a mixture in constant proportions and made up of filaments having circular and non-circular cross-sections.

*Fig. 1*

**Fig. 2**

**Fig. 3**

Fig. 4

Fig. 5

Fig. 6

Fig. 7